Europäisches Patentamt

European Patent Office

Office européen des brevets

(19)

(11) Veröffentlichungsnummer: **0 005 514**
**B1**

(12) **EUROPÄISCHE PATENTSCHRIFT**

(45) Veröffentlichungstag der Patentschrift: **10.11.82**

(21) Anmeldenummer: **79101439.2**

(22) Anmeldetag: **11.05.79**

(51) Int. Cl.³: **C 08 K 9/04, C 10 M 5/08, C 10 M 7/12**

(54) Additivsystem für die Verwendung in Polymeren.

(30) Priorität: **19.05.78 CH 5463/78**

(43) Veröffentlichungstag der Anmeldung:
**28.11.79 Patentblatt 79/24**

(45) Bekanntmachung des Hinweises auf die Patenterteilung:
**10.11.82 Patentblatt 82/45**

(84) Benannte Vertragsstaaten:
**DE FR GB IT NL**

(56) Entgegenhaltungen:
CH - A - 373 183
CH - A - 404 191
CH - A - 514 636
DE - A - 2 546 900
US - A - 3 666 700
US - A - 3 755 200
US - A - 4 040 997

(73) Patentinhaber: **CIBA-GEIGY AG**
**Patentabteilung Postfach**
**CH-4002 Basel (CH)**

(72) Erfinder: **Büssing, Jürgen, Dr.**
**Altengassweg 38**
**D-6140 Bensheim (DE)**
Erfinder: **Müller, Hubert**
**Am Henisgraben 18**
**D-6110 Dieburg (DE)**

Courier Press, Leamington Spa, England.

# 0 005 514

## Additivsystem für die Verwendung in Polymeren

Kunststoffe bedürfen häufig des Zusatzes von Additiven. Solche Additive können z.B. feste oder flüssige Stabilisatoren sein, die in der Praxis oft nicht allein, sondern zusammen mit weiteren Hilfsstoffen, wie Gleitmitteln, verwendet werden. Es ist dabei wünschenswert, flüssige und feste Produkte zusammenzufassen.

So ist es aus der DE—AS 1.544.697 bekannt, feste, insbesondere pulverförmige Stabilisatoren durch Zusammenschmelzen mit Gleitmitteln in geeignete, staubfreie Gemische zu überführen. Ein ebenfalls in der Schmelze vereinigtes Gemisch eines Gleitmittels mit festen Stabilisatoren (Komponente b) offenbart die DE—AS 1.569.190. Eine ähnliche Mischung fester, hochschmelzender Stabilisatoren mit Gleitmitteln beschreibt die DE—AS 1.542.058.

Während für Kombinationen fester Stabilisatoren mit Gleitmitteln also gangbare Vorschläge gemacht wurden, ist die Kombination flüssiger Stabilisatoren mit festen Gleitmitteln bisher nicht zufriedenstellend gelöst. So wurden bisher flüssige Additive durch Absorption an Trägerstoffen, wie porösen Füllstoffen oder Harzen, in feste Form überführt. Das hat jedoch den Nachteil, das weitere Zusätze in den Kunststoff gelangen, was nicht immer erwünscht ist, einen oft unnötigen Ballast darstellt, und z.B. ein erneutes Zulassungsverfahren bei den Gesundheitsbehörden eforderlich machen kann. Solche Systeme sind z.B. in der US 3.382.199 und der DE—OS 22 29 022 beschrieben.

Aufgabe der Erfindung war es, einen gangbaren Weg für die Kombination flüssiger Additive allgemein mit festen Gleitmitteln aufzuzeigen, der die bisherigen Nachteile nicht mit sich bringt.

Zur Lösung dieser Aufgabe wird erfindungsgemäss vorgeschlagen eine feste Kombination eines flüssigen Additivs in inniger Mischung mit einem festen Gleitmittel.

Die innige Mischung wird insbesondere dadurch erreicht, dass man Additiv und Gleitmittel unter Erwärmen zusammen bringt, insbesondere bei einer Temperatur über dem Schmelzpunkt des Gleitmittels, z.B. so, dass man das Gleitmittel über seinen Schmelzpunkt erhitzt und dann das flüssige Additiv einrürht. Dabei kann man leicht die maximale Absorptionskapazität durch Vorversuche ermitteln. Die homogene Mischung wird anschliessend abgekühlt, wobei verschiedene Verfahren möglich sind, z.B. Erstarren lassen der Masse en bloc, Aufgiessen auf ein Kühlband, Versprühen, Aufgiessen auf die Randzone einer rotierenden Scheibe, Eingiessen in Wasser oder in ein anderes Kühlmedium. Das erstarrte Material wird gegebenenfalls noch z.B. zerkleinert, gemahlen oder geschuppt.

Die verwendeten Gleitmittel sind fest und haben einen Schmelzpunkt von 30—250°C, bevorzugt 50—120°C. Geeignete Gleitmittel sind polar oder unpolar, auch als sog. innere und äussere Gleitmittel bezeichnet, und z.B. Paraffine, wie Hartparaffin, Polyäthylenwachse, auch oxidiert und teilverseift, Montanwachse, Wachsester, Fettalkohole, ein- und mehrbasische Fettsäuren, deren Salze und Ester, Ester mehrwertiger Alkohole und Fettsäureamide. Hervorzuheben sind Paraffine, aber auch Mischungen von zwei, drei oder auch mehreren Gleitmitteln.

Die verwendeten flüssigen Additive sind Kunststoff-Stabilisatoren im weitesten Sinne, wie Thermo- und Lichtstabilisatoren, Weichmacher, Antioxidantien, Costabilisatoren, Antistatika, Flammschutzmittel oder auch wiederum Gleitmittel, und davon insbesondere Barium-Cadmium-Stabilisatoren, vor allem aber Organozinnstabilisatoren und Phosphite.

Das Mischungsverhältnis von flüssigem Additiv zu festem Gleitmittel liegt bei 2:1 bis 1:100, insbesondere bei 1:1 bis 1:5.

Die erfindungsgemässe Kombination kann gegebenenfalls weitere Zusätze enthalten, die in heissem oder abgekühltem Zustand zugegeben werden können. Ist die Kombination z.B. etwas klebrig, können Fliesshilfsmittel (processing aids) zugegeben werden, die in der Schmelze für einen ausreichenden Fliesseffekt sorgen, z.B. ein copolymeres Acrylat/Methacrylat oder Polymethacrylat. Geeignete weitere Zusätze sind z.B. Modifier, die die Schlagzähigkeit z.B. in PVC beeinflussen, wie ABS, MBS, chloriertes Polyäthylen oder EVA.

Die erfindungsgemässe Kombination gestattet den Einsatz von festen, z.B. pulverförmigen Zusätzen in jeder Art von Polymeren, in denen flüssige Stabilisatoren verwendet werden. Beispielsweise seien gennant Polyolefine, wie Polyäthylen hoher und niedriger Dichte, Polypropylen, Aethylen-Propylen-Copolymerisate, Styrolpolymerisate, wie Polystyrol, Styrol-Butadien-Acrylnitril-Copolymerisate, Mischungen von Polyolefinen oder von Styrolpolymerisaten, Polyamide, Polyurethane, wie solche auf Polyäther- oder Polyesterbasis, und insbesondere halogenhaltige Polymere, wie Vinylchlorid-Homo- und -Mischpolymerisate, vor allem Polyvinylchlorid. Die Einarbeitung der erfindungsgemässen festen Kombination kann in üblicher Weise erfolgen.

Mit den erfindungsgemässen Kombinationen werden beträchtliche Vorteile erzielt. So sind keine Ballaststoffe nötig, die zu Eigenschaftsänderungen im Polymer führen können und zudem unwirtschaftlich sind. Die Handhabung flüssiger Additive ist stark vereinfacht, das Dosieren kann problemlos erfolgen und zudem tritt eine Hydrophobierung des verwendeten Additivs ein. Dies ist anwendungstechnisch günstig, da keine Feuchtigkeit in den Verarbeitungsprozess eingeschleppt wird und feuchtigkeitsempfindliche Additive besser geschützt sind. Zudem sind die erfindungsgemässen Kombinationen lagerfähig und besonders gut handhabbar.

Diese Vorteile waren aus dem Stand der Technik nicht vorauszusehen. Insbesondere war nicht zu erwarten, dass polare und unpolare Gleitmittel überhaupt eine ausreichende Aufnahmefähigkeit für flüssige Additive haben würden. Diese Aufnahmefähigkeit hat sich als überraschend gross herausgestellt, so gross, dass erfindungsgemäss eine technisch gangbare und zudem vorteilhafte Lösung des gennanten Problems aufgezeigt wird.

Die Erfindung wird in folgenden anhand bevorzugter Ausführungsformen beispielhaft erläutert, ohne dass darin eine Beschränkung des Erfindungsgegenstandes liegen soll. Verhältnisangaben beziehen sich auf Gewichtsverhältnisse, Teile auf Gewichtsteile.

Versuch 1

Prüfung der Mischbarkeit von Gleitmitteln mit einem flüssigen Additiv (Di-n-octylzinn-bis-isooctylthioglycolat)

| Gleitmittel | Erweichungspunkt [°C] |
|---|---|
| Stearinsäure | 60 |
| Bis-stearoyläthylendiamin | 144 |
| Paraffinwachse | 54/72/99 |
| ox. Paraffinwachs | 103 |
| ox. und teilverseiftes Polyäthylenwachs | 104 |
| Stearylalkohol | 52 |
| Glycerinmonostearat | 62 |
| Stearylstearat | 58 |

Es wurden Mischungen von 1:0,5 bis 1:1,5 aus Gleitmittel und Additiv hergestellt. Die Erweichungspunkte fielen bei den additivreichsten Mischungen bis um 10°C vom Ausgangswert ab. Die Beschaffenheit der abgekühlten und zerkleinerten Massen war bis zu einem Mischungsverhältnis von 1:1 wachsartig bis trocken-rieselfähig. Darüber hinaus zeigten die meisten Produkte mit Ausnahme der Paraffinwachse eine leichte bis stärkere Klebrigkeit der Oberfläche.

Versuche 2

Ergebnisse aus Mischversuchen von festen Gleitmitteln mit verschiedenen Additven (Teile beziehen sich auf Gewichtsteile).

| Beispiel Nr. | Gleitmittel | flüssiges Additiv | | Mischungs-verhaltnis | Bemerkungen |
|---|---|---|---|---|---|
| ① | Stearinsäure | Barium-nonylphenolat | 15 Teile | 1:0,5 | wachsartig |
| | | Cadmium-2-äthylhexoat | 20 ,, | | |
| | | Zink-2-äthylhexoat | 2 ,, | | |
| | | Triphenylphosphit | 38 ,, | | |
| | | aliphatischer Kohlen-wasserstoff | 25 ,, | | |
| ② | wie Beispiel ① | wie Beispiel ① | | 1:1 | klebrig |
| ③ | wie Beispiel ① | wie Beispiel ① | | 1:1,5 | schmierig |
| ④ | wie Beispiel ① | Didecylphenylphosphit | | 1:0,5 | wachsartig |
| ⑤ | wie Beispiel ① | wie Beispiel ④ | | 1:1 | klebrig |
| ⑥ | wie Beispiel ① | epox. Sojabohnenöl | | 1:0,5 | wachsartig |
| ⑦ | wie Beispiel ① | wie Beispiel ⑥ | | 1:1 | klebrig |
| ⑧ | 12-Hydroxystearinsaure | wie Beispiel ④ | | 1:0,5 | leicht klebrig |
| ⑨ | wie Beispiel ⑧ | wie Beispiel ④ | | 1:1 | klebrig |
| ⑩ | Paraffinwachs | Dibutylzinnmaleinsäureester | | 1:0,5 | trocken, krümmlig |
| ⑪ | wie Beispiel ⑩ | wie Beispiel ⑩ | | 1:1 | leicht klebrig |
| ⑫ | 12-Hydroxystearinsäure 0,4 Teile<br>Stearylstearat 0,5 ,, | wie Beispiel ④ | | 1:0,5<br>1:1 | wachsartig<br>,, |

0 005 514

| Beispiel Nr. | Gleitmittel | | | flüssiges Additiv | | | Mischungsverhältnis | Bemerkungen |
|---|---|---|---|---|---|---|---|---|
| ⑬ | Paraffinwachs<br><br>Ca-stearat | 0,8 Teile<br><br>0,8 ,, | } | Dimethylzinn-bis-thioglykol-säure-isooctylester<br><br>Monomethylzinn-tris-thiogly-kolsäure-isooctylester | | | 1:0,2 | rieselfähig |
| ⑭ | wie Beispiel ⑬<br><br>wie Beispiel ⑬ | 1,4 ,,<br><br>0,6 ,, | } | Di-n-octylzinn-bis-thioglykol-säure-isooctylester | | | 1:0,2 | rieselfähig |
| ⑮ | Ox. Polyäthylenwachs<br><br>Paraffinwachs | 0,8 ,,<br><br>0,8 ,, | } | Dibutylzinn-bis-maleinsäure-monobutylester | | | 1:1,6 | (unter Zusatz von Fliesshilfsmittel)<br><br>Poly-acryl/methacryl-säure-butylester<br><br>rieselfähig |
| ⑯ | wie Beispiel ⑫<br><br>wie Beispiel ⑫ | 0,5 ,,<br><br>0,5 ,, | } | wie Beispiel ④<br><br>Epoxyweichmacher | 0,6 Teile<br><br>1,5 ,, | } | 1:2,1 | (unter Zusatz von pulverf. BaCd–Stabilisator)<br><br>Bariumlaurat 30<br>Cadmiumlaurat 60<br>Pentaerythrit 5<br>Bisphenol A 5<br><br>wachsartig |
| ⑰ | Stearylalkohol<br><br>Stearylstearat<br><br>Polyäthylenwachs | 0,5 ,,<br><br>0,7 ,,<br><br>0,2 ,, | } | wie Beispiel ⑭ | | | 1:0,7 | wachsartig<br><br>(unter Zusatz von Fliesshilfsmittel)<br><br>Poly-acryl/methacryl-säure-butylester<br><br>rieselfahig |

0 005 514

| Beispiel Nr. | Gleitmittel | | | flüssiges Additiv | | | Mischungs-verhalnis | Bemerkungen |
|---|---|---|---|---|---|---|---|---|
| ⑱ | Paraffinwachs | 0,6 | Teile | Dibutylzinn-bis-thio-propionsäure-isooctyl-ester | 1,5 Teile | } | 1:2,2 | (unter Zusatz von Modifier)<br>Methacrylsäureester-Butadien-Styrol-Terpoly-merisat |
| | Ox. Paraffinwachs | 0,6 | ,, | | | | | |
| | Polyäthylenwachs | 0,2 | ,, | Epoxyweichmacher | 1,5 ,, | | | rieselfähig |

0 005 514

**0 005 514**

**Patentansprüche**

1. Feste Kombination eines flüssigen Additivs in inniger Mischung mit einem festen Gleitmittel mit einem Schmelzpunkt von 30—250°C, wobei das Gleitmittel über seinen Schmelzpunkt erhitzt wird, das Additiv eingerührt wird und das Mischungsverhältnis von flüssigem Additiv zu festem Gleitmittel bei 2:1 bis 1:100 liegt.

2. Kombination nach Anspruch 1, worin das Gleitmittel ein Paraffin ist.

3. Kombination nach Anspruch 1, worin das Additiv ein Organozinnstabilisator oder ein Phosphit ist.

4. Kombination nach Anspruch 1, wobei das Mischungsverhältnis von flüssigem Additiv zu festem Gleitmittel bei 1:1 bis 1:5 liegt.

5. Kombination nach Anspruch 1, worin weitere übliche Zusätze enthalten sind.

6. Kombination nach Anspruch 5, worin als weitere Zusätze Fliesshilfsmittel und/oder Modifier enthalten sind.

7. Kombination nach Anspruch 1, für die Verwendung in Kunststoffen.

8. Kombination nach Anspruch 7, für die Verwendung in halogenhaltigen Polymeren.

**Claims**

1. A solid combination of a liquid additive in intimate admixture with a solid lubricant having a melting point of 30—250°C, whereby the lubricant is heated to above its melting point, the additive is stirred in, and the mixture ratio of liquid additive to solid lubricant is 2:1 to 1:100.

2. A combination according to Claim 1, wherein the lubricant is a paraffin.

3. A combination according to Claim 1, wherein the additive is an organotin stabiliser or a phosphite.

4. A combination according to Claim 1, wherein the mixture ratio of liquid additive to solid lubricant is 1:1 to 1:5.

5. A combination according to Claim 1, wherein further customary additives are contained.

6. A combination according to Claim 5, wherein further additives contained are flow-promoting agents and/or modifiers.

7. A combination according to Claim 1, which is for use in plastics.

8. A combination according to Claim 7, which is for use in halogen-containing polymers.

**Revendications**

1. Association solid d'un additif liquide intimement mélangé avec un lubrifiant solide ayant un point de fusion de 30 à 250°C, le lubrifiant étant chauffé à une température supérieure à son point de fusion, l'additif étant introduit sous agitation et le repport entre la quantité de l'additif liquide et celle du lubrifiant solide, dans le mélange, étant compris entre 2:1 et 1:100.

2. Association selon la revendication 1 dans laquelle le lubrifiant est une paraffine.

3. Association selon la revendication 1 dans laquelle l'additif est un stabilisant organostannique ou un phosphite.

4. Association selon la revendication 1 dans laquelle le rapport entre la quantité de l'additif liquide et celle du lubrifiant solide, dans le mélange, est compris entre 1:1 et 1:5.

5. Association selon la revendication 1 dans laquelle il y a des additifs supplémentaires usuels.

6. Association selon la revendication 5 qui contient, comme additifs supplémentaires, des adjuvants d'écoulement et/ou des modificateurs.

7. Association selon la revendication 1 pour l'application dans des matières plastiques.

8. Association selon la revendication 7 pour l'application dans des polymères halogénés.